# EUROPEAN PATENT APPLICATION

(11) **EP 2 861 012 A1**
(43) Date of publication of application: **15.04.2015**
(21) Application number: 13800794.3
(22) Date of filing: 14.05.2013
(51) Int. Cl.: H04W 28/08, H04W 92/24

(54) **WIRELESS COMMUNICATION SYSTEM, SERVING GATEWAY, NETWORK, AND LOGICAL PATH ESTABLISHING METHOD**

(30) Priority: 06.06.2012 JP 2012128547
(71) Applicant: NTT Docomo, Inc., Tokyo 100-6150 (JP)
(72) Inventor: MORIOKA, Yasufumi, Tokyo 100-6150 (JP)
(74) Representative: Hoffmann Eitle
(86) International application number: PCT/JP2013/063380
(87) International publication number: WO 2013/183405

(57) **Abstract**

A radio communication system includes a packet gateway, serving gateways, a switching center that controls establishment of a logical path, a base station, and a user device. A first serving gateway transmits connection information to other nodes. When a first logical path is established through the first serving gateway, the packet gateway makes a request to a second serving gateway to establish a second logical path through the second serving gateway. Based on the request, the second logical path that passes through the second serving gateway is established between the packet gateway and the user device.

## Description

### TECHNICAL FIELD

The present invention relates to radio communication systems, to serving gateways, to networks, and to logical path establishment methods.

### BACKGROUND ART

Recently, because radio communication traffic volume is increasing as user devices such as smartphones become increasingly sophisticated, improvement in the processing capacity of radio communication systems is needed. To improve the processing capacity, a configuration is suggested in which multiple nodes with the same level of functionality are set up in a radio communication system to distribute (offload) communication loads. For example, Patent Document 1 suggests utilizing, in addition to a large-scale base station (a macro base station) that covers a wide area, a small-scale base station (e.g., a pico base station and a femto base station) that covers a smaller area than the large-scale base station so as to reduce the traffic volume that each base station needs to process in order to improve the overall throughput of the radio communication system.

### CITATION LIST

### PATENT DOCUMENT

Patent Document 1: JP-A-2010-062875

### SUMMARY OF INVENTION

### TECHNICAL PROBLEM

The configuration according to Patent Document 1 that utilizes multiple base stations can avoid a situation in which communication traffic is concentrated at a single base station. However, when the base stations have a common upper node (i.e., a node that is closer to an external network such as the Internet), even though the loads on the base stations may be distributed, communication traffic will be concentrated at the upper node. Consequently, an improvement in the overall throughput of the radio communication system may not be achieved.

In light of the situation above, an object of the present invention is to make load distribution at an upper node possible.

### SOLUTION TO PROBLEM

A radio communication system according to the present invention includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; at least one base station connected to the switching center; and a user device wirelessly communicable with the at least one base station. The first serving gateway includes: a storage unit that stores first connection information used to connect to the packet gateway, second connection information used to connect to the second serving gateway, and third connection information used to connect to the switching center; and a connection information transmitting unit that transmits the second connection information to the packet gateway, transmits the first connection information and the third connection information to the second serving gateway, and transmits the second connection information to the switching center. When a first logical path corresponding to the access point name of the packet gateway is established between the packet gateway and the user device through the first serving gateway, the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path, the second serving gateway, based on the received logical path establishment request, transmits a logical path establishment request directed at the switching center to the switching center using the third connection information, the switching center, after controlling the at least one base station and the user device in accordance with the logical path establishment request directed at the switching center so that the second logical path is established, transmits a logical path establishment response to the second serving gateway using the second connection information, the second serving gateway, based on the received logical path establishment response, transmits a logical path establishment response directed at the packet gateway to the packet gateway using the first connection information, and the packet gateway receives the logical path establishment response directed at the packet gateway.

According to the configuration described above, logical paths that are established through the same packet gateway, i.e., logical paths to which the same access point name is assigned, can be established through different serving gateways. Therefore, communication loads at the serving gateways, which are upper nodes at which communication traffic is likely to be concentrated, are distributed. Thus, the overall throughput of the radio communication system can be improved. Additionally, since a single access point name can correspond to multiple logical paths (the first logical path, the second logical path), load distribution at the serving gateways can be achieved while the same access point is used (i.e., without dividing a service).

Another radio communication system according to the present invention includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; at least one base station connected to the switching center; and a user device wirelessly communicable with the at least one base station. The first serving gateway includes: a first storage unit that stores first connection information used to connect to the packet gateway, second connection information used to connect to the second serving gateway, and third connection information used to connect to the switching center; and a first connection information transmitting unit that transmits the second connection information to the packet gateway and transmits the first connection information and the third connection information to the second serving gateway. The second serving gateway includes: a second storage unit that stores the second connection information; and a second connection information transmitting unit that transmits the second connection information to the switching center. When a first logical path corresponding to the access point name of the packet gateway is established between the packet gateway and the user device through the first serving gateway, the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path, the second serving gateway, based on the received logical path establishment request, transmits a logical path establishment request directed at the switching center to the switching center using the third connection information, the switching center, after controlling the at least one base station and the user device in accordance with the logical path establishment request directed at the switching center so that the second logical path is established, transmits a logical path establishment response to the second serving gateway using the second connection information, the second serving gateway, based on the received logical path establishment response, transmits a logical path establishment response directed at the packet gateway to the packet gateway using the first connection information, and the packet gateway receives the logical path establishment response directed at the packet gateway.

The configuration described above has advantages similar to those of the above-described radio communication system. Furthermore, since the second serving gateway transmits the second connection information of its own gateway directly to the switching center, compared with a configuration in which the second connection information is indirectly transmitted from the first serving gateway, more updated second connection information can be transmitted to the switching center.

Preferably, the radio communication system includes a first base station and a second base station, each of which is a base station included in the at least one base station. The first logical path is established between the packet gateway and the user device through the first base station and the first serving gateway. The second logical path is established between the packet gateway and the user device through the second base station and the second serving gateway.

According to the configuration described above, since communication loads are distributed not only at the level of the serving gateways, but also at the level of the base stations, load distribution can be achieved more effectively. Thus, the overall throughput of the radio communication system can be improved even more.

Preferably, the first base station forms a first cell and is wirelessly communicable with the user device using a first frequency band. The second base station forms a second cell that is smaller than the first cell and is wirelessly communicable with the user device using a second frequency band that is higher in frequency than the first frequency band.

According to the configuration described above, since radio communication can be performed using a communication path that uses a high frequency band and has high throughput and a communication path that uses a low frequency band and is stable, improvement in throughput and stable radio communication can be achieved at the same time.

A serving gateway according to the present invention is in a radio communication system that includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; at least one base station connected to the switching center; and a user device wirelessly communicable with the at least one base station. The serving gateway is the first serving gateway in the radio communication system. The serving gateway includes: a storage unit that stores first connection information used to connect to the packet gateway, second connection information used to connect to the second serving gateway, and third connection information used to connect to the switching center; and a connection information transmitting unit that transmits the second connection information to the packet gateway, transmits the first connection information and the third connection information to the second serving gateway, and transmits the second connection information to the switching center. When a first logical path corresponding to the access point name of the packet gateway is established between the packet gateway and the user device through the first serving gateway, the second connection information is used by the packet gateway to transmit a logical path establishment request to the second serving gateway, the logical path establishment request requesting establishment of a second logical path between the packet gateway and the user device through the second serving gateway, the second logical path corresponding to the access point name and being different from the first logical path, the third connection information is used by the second serving gateway to transmit, based on the received logical path establishment request, a logical path establishment request directed at the switching center to the switching center, the second connection information is, after the switching center controls the at least one base station and the user device in accordance with the logical path establishment request directed at the switching center so that the second logical path is established, further used by the switching center to transmit a logical path establishment response to the second serving gateway, and the first connection information is used by the second serving gateway to transmit, based on the received logical path establishment response, a logical path establishment response directed at the packet gateway to the packet gateway.

A network according to the present invention includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; and at least one base station that is connected to the switching center and is wirelessly communicable with a user device. The first serving gateway includes: a storage unit that stores first connection information used to connect to the packet gateway, second connection information used to connect to the second serving gateway, and third connection information used to connect to the switching center; and a connection information transmitting unit that transmits the second connection information to the packet gateway, transmits the first connection information and the third connection information to the second serving gateway, and transmits the second connection information to the switching center. When a first logical path corresponding to the access point name of the packet gateway is established between the packet gateway and the user device through the first serving gateway, the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path, the second serving gateway, based on the received logical path establishment request, transmits a logical path establishment request directed at the switching center to the switching center using the third connection information, the switching center, after controlling the at least one base station and the user device in accordance with the logical path establishment request directed at the switching center so that the second logical path is established, transmits a logical path establishment response to the second serving gateway using the second connection information, the second serving gateway, based on the received logical path establishment response, transmits a logical path establishment response directed at the packet gateway to the packet gateway using the first connection information, and the packet gateway receives the logical path establishment response directed at the packet gateway.

Another network according to the present invention includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; and at least one base station that is connected to the switching center and is wirelessly communicable with a user device. The first serving gateway includes: a first storage unit that stores first connection information used to connect to the packet gateway, second connection information used to connect to the second serving gateway, and third connection information used to connect to the switching center; and a first connection information transmitting unit that transmits the second connection information to the packet gateway and transmits the first connection information and the third connection information to the second serving gateway. The second serving gateway includes: a second storage unit that stores the second connection information; and a second connection information transmitting unit that transmits the second connection information to the switching center. When a first logical path corresponding to the access point name of the packet gateway is established between the packet gateway and the user device through the first serving gateway, the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path, the second serving gateway, based on the received logical path establishment request, transmits a logical path establishment request directed at the switching center to the switching center using the third connection information, the switching center, after controlling the at least one base station and the user device in accordance with the logical path establishment request directed at the switching center so that the second logical path is established, transmits a logical path establishment response to the second serving gateway using the second connection information, the second serving gateway, based on the received logical path establishment response, transmits a logical path establishment response directed at the packet gateway to the packet gateway using the first connection information, and the packet gateway receives the logical path establishment response directed at the packet gateway.

A logical path establishment method according to the present invention is for a radio communication system that includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; at least one base station connected to the switching center; and a user device wirelessly communicable with the at least one base station. The logical path establishment method includes: in the first serving gateway, storing first connection information used to connect to the packet gateway, second connection information used to connect to the second serving gateway, and third connection information used to connect to the switching center, transmitting the second connection information to the packet gateway, transmitting the first connection information and the third connection information to the second serving gateway, and transmitting the second connection information to the switching center. When a first logical path corresponding to the access point name of the packet gateway is established between the packet gateway and the user device through the first serving gateway, in the packet gateway, transmitting a logical path establishment request to the second serving gateway using the second connection information, the logical path establishment request requesting establishment of a second logical path between the packet gateway and the user device through the second serving gateway, the second logical path corresponding to the access point name and being different from the first logical path, in the second serving gateway, transmitting, based on the received logical path establishment request, a logical path establishment request directed at the switching center to the switching center using the third connection information, in the switching center, transmitting, after controlling the at least one base station and the user device in accordance with the logical path establishment request directed at the switching center so that the second logical path is established, a logical path establishment response to the second serving gateway using the second connection information, in the second serving gateway, transmitting, based on the received logical path establishment response, a logical path establishment response directed at the packet gateway to the packet gateway using the first connection information, and in the packet gateway, receiving the logical path establishment response directed at the packet gateway.

Another logical path establishment method according to the present invention is for a radio communication system that includes: a packet gateway that is assigned an access point name and is configured to function as an access point connecting to an external network; serving gateways that are connected to the packet gateway and include a first serving gateway and a second serving gateway; a switching center that is connected to the serving gateways and controls establishment of a logical path; at least one base station connected to the switching center; and a user device wirelessly communicable with the at least one base station. The logical path establishment method includes: in the first serving gateway, storing first connection information used to connect to the packet gateway, second connection information used to connect to the second serving gateway, and third connection information used to connect to the switching center, transmitting the second connection information to the packet gateway, and transmitting the first connection information and the third connection information to the second serving gateway, and in the second serving gateway, storing the second connection information and transmitting the second connection information to the switching center. When a first logical path corresponding to the access point name of the packet gateway is established between the packet gateway and the user device through the first serving gateway, in the packet gateway, transmitting a logical path establishment request to the second serving gateway using the second connection information, the logical path establishment request requesting establishment of a second logical path between the packet gateway and the user device through the second serving gateway, the second logical path corresponding to the access point name and being different from the first logical path, in the second serving gateway, transmitting, based on the received logical path establishment request, a logical path establishment request directed at the switching center to the switching center using the third connection information, in the switching center, transmitting, after controlling the at least one base station and the user device in accordance with the logical path establishment request directed at the switching center so that the second logical path is established, a logical path establishment response to the second serving gateway using the second connection information, in the second serving gateway, transmitting, based on the received logical path establishment response, a logical path establishment response directed at the packet gateway to the packet gateway using the first connection information, and in the packet gateway, receiving the logical path establishment response directed at the packet gateway.

### BRIEF DESCRIPTION OF DRAWINGS

FIG. 1 is a block diagram illustrating a radio communication system according to a first embodiment of the present invention;
FIG. 2 is an explanatory drawing illustrating an example of a dedicated bearer establishment operation according to the first embodiment;
FIG. 3 is a block diagram illustrating a configuration of a user device according to the first embodiment;
FIG. 4 is a block diagram illustrating a configuration of a base station according to the first embodiment;
FIG. 5 is a block diagram illustrating a configuration of a switching center according to the first embodiment;
FIG. 6 is a block diagram illustrating a configuration of a serving gateway according to the first embodiment;
FIG. 7 is a block diagram illustrating a configuration of a packet gateway according to the first embodiment;
FIG. 8 is an explanatory drawing illustrating an example of a dedicated bearer establishment operation according to a second embodiment;
FIG. 9 is a block diagram illustrating a radio communication system according to a third embodiment of the present invention;
FIG. 10 is an explanatory drawing illustrating a configuration of a cell that each base station forms; and
FIG. 11 is an explanatory drawing illustrating an example of a dedicated bearer establishment operation according to the third embodiment.

### DESCRIPTION OF EMBODIMENTS

### FIRST EMBODIMENT

### 1-1. Configuration of Radio Communication System

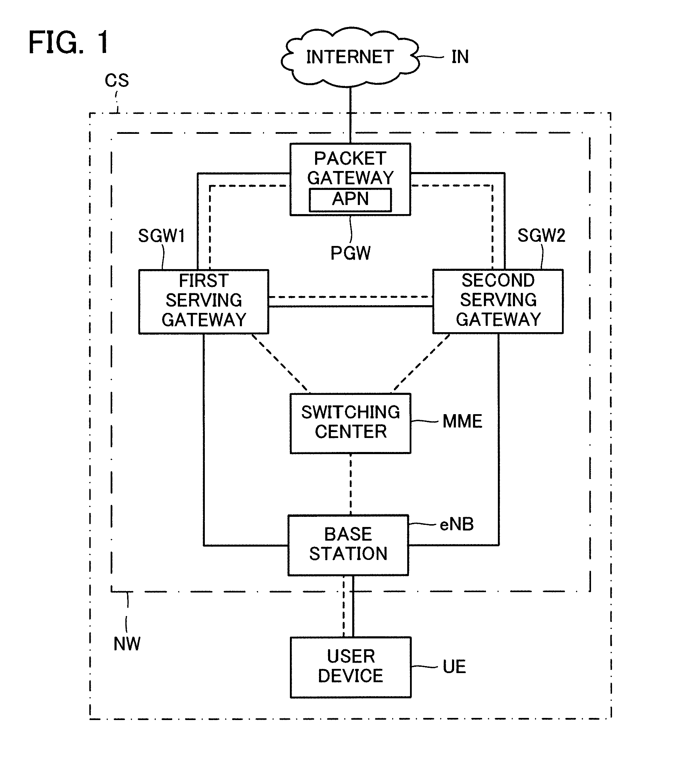

FIG. 1 is a block diagram of a radio communication system CS according to a first embodiment of the present invention. The radio communication system CS includes, as its elements, a user device UE, a base station eNB, a switching center MME, a first serving gateway SGW1, a second serving gateway SGW2, and a packet gateway PGW. A network NW includes all the above-mentioned elements that the radio communication system CS includes, except for the user device UE.

Each element in the radio communication system CS performs communication in compliance with a predetermined access technology, e.g., LTE/SAE (Long Term Evolution/System Architecture Evolution) specified in the 3GPP (Third Generation Partnership Project) protocols. In compliance with terms specified in the 3GPP protocols, the user device UE is a user equipment, the base station eNB is an evolved Node B, the switching center MME is a mobile management entity, each of the first serving gateway SGW1 and the second serving gateway SGW2 is a serving gateway, and the packet gateway PGW is a packet data network (PDN) gateway. In the present embodiment, the radio communication system CS operates in compliance with LTE/SAE, but this is not intended to limit the technical scope of the present invention. The present invention can be used with other access technologies with necessary design modifications.

The user device UE can perform radio communication with the base station eNB. A scheme for radio data transmission between the user device UE and the base station eNB can be chosen freely. For example, OFDMA (Orthogonal Frequency Division Multiple Access) may be adopted for downlink communication, whereas SC-FDMA (Single-Carrier Frequency Division Multiple Access) may be adopted for uplink communication.

The base station eNB is wire-connected to the switching center MME, to the first serving gateway SGW1, and to the second serving gateway SGW2. The switching center MME is wire-connected to the first serving gateway SGW1 and to the second serving gateway SGW2 as well as to the base station eNB. The first serving gateway SGW1 and the second serving gateway SGW2 are wire-connected to each other. Each of the first serving gateway SGW1 and the second serving gateway SGW2 is wire-connected to the packet gateway PGW. The packet gateway PGW is connected to each serving gateway SGW and is also connected to an internet IN that is an external network of the radio communication system CS. That is, the packet gateway PGW functions as an access point connecting to the external network.

The packet gateway PGW is assigned an access point name (APN). The access point name is an identifier that identifies the packet gateway PGW and is used by the user device UE when the user device UE establishes a connection to the internet IN. Each packet gateway PGW is assigned a unique access point name.

### 1-2. Transmission and Reception of User Signals and Control Signals

With reference to FIG. 1 again, description of transmission and reception of a user signal and a control signal in the radio communication system CS is given. In FIG. 1, solid lines indicate paths used to transmit and receive a user signal (a signal that indicates user data such as a voice signal and a data signal) and dashed lines indicate paths used to transmit and receive a control signal. In other words, the solid lines indicate interfaces of a U-plane (user plane) and the dashed lines indicate interfaces of a C-plane (control plane). For the above-mentioned interfaces, basically, a protocol architecture of Evolved Packed System (EPS) specified by 3GPP is adopted. In the present configuration, the serving gateways SGW can communicate with each other through the interfaces of a U-plane and those of a C-plane.

In the example shown in FIG. 1, the user device UE can connect to the internet IN through two different paths. That is, the user device UE can perform communication using a U-plane path that passes through the base station eNB, the first serving gateway SGW1, and the packet gateway PGW to the internet IN and a U-plane path that passes through the base station eNB, the second serving gateway SGW2, and the packet gateway PGW to the internet IN.

In the radio communication system CS, a user signal is transmitted and received using a bearer, which is a logical path. A bearer (EPS bearer) is established, based on control by the switching center MME, with the user device UE as one endpoint and the packet gateway PGW as the other endpoint. Bearers includes a default bearer that is established when the user device UE attaches to the network NW and a dedicated bearer that is established based on a request from the user device UE or the packet gateway PGW while a default bearer has already been established. A bearer can be identified based on an access point name APN. That is, a bearer corresponds to an access point name APN. One or more dedicated bearers can be established in addition to a default bearer, and the user device UE can perform communication using multiple bearers at the same time.

### 1-3. Establishment of Dedicated Bearer

According to a conventional technology, a dedicated bearer is established through a serving gateway SGW through which a default bearer has been established. In such a case, if the user device UE performs communication using both the default bearer and the dedicated bearer simultaneously, communication traffic may be concentrated at the single serving gateway SGW, which may lead to a decrease in the overall throughput of the radio communication system CS. In light of the situation above, in the present embodiment, a dedicated bearer is established through a serving gateway SGW that is different from a serving gateway SGW through which a default bearer has been established.

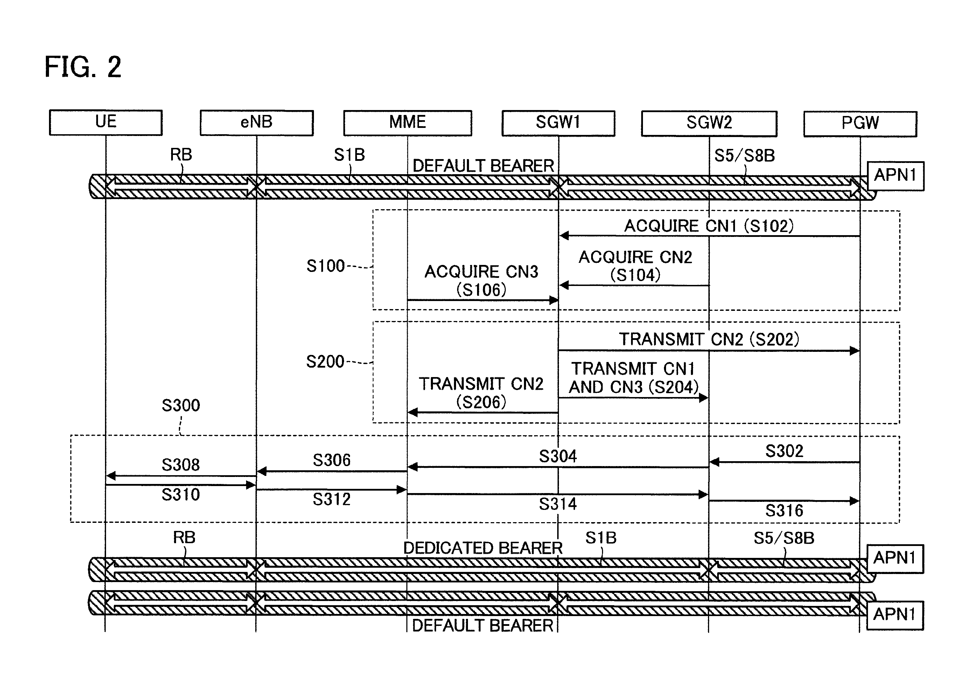

With reference to FIG. 2, an example of a dedicated bearer establishment operation according to the present embodiment is described. In the example shown in FIG. 2, a default bearer is assumed to have been established between the user device UE and the packet gateway PGW. The packet gateway PGW is assigned an access point name "APN1". The default bearer is established through the base station eNB and the first serving gateway SGW1 and is corresponding to the access point name "APN1" of the packet gateway PGW. The user device UE can transmit and receive data signals to and from the internet IN using the default bearer.

An EPS bearer (a default bearer, a dedicated bearer) includes a radio bearer (RB) established between the user device UE and the base station eNB, an S1 bearer (S1B) established between the base station eNB and either one of the serving gateways SGW, and an S5/S8 bearer (S5/S8B) established between either one of the serving gateways SGW and the packet gateway PGW.

Nodes in the radio communication system CS have their respective connection information CN. Connection information CN of a node can include an IP address, a TEID (tunnel endpoint ID), a network address, and connection regulation information of the node. The IP address is an address value that uniquely identifies the node in the radio communication system CS. The TEID is an identifier that identifies an endpoint of a tunnel (e.g., a GTP tunnel) that logically connects nodes. The network address is an address value that identifies, when the radio communication system CS is divided into subnets, to which subnet the node belongs. The connection regulation information is information that indicates whether it is possible to connect to the node (whether a connection to the node should be regulated). For example, the connection regulation information of the node indicates "connection not allowed" when congestion occurs at the node or when a failure occurs at the node.

The nodes in the radio communication system CS, based on connection information CN of other nodes, identify other nodes and perform transmission and reception of data such as user data and control data. That is, when a node establishes a connection with another node, the former node uses connection information CN of the latter node. Hereinafter, in particular, connection information used to connect to the packet gateway PGW is referred to as first connection information CN1, connection information used to connect to the second serving gateway SGW2 is referred to as second connection information CN2, and connection information used to connect to the switching center MME is referred to as third connection information CN3. The serving gateways SGW and the switching center MME store, in advance, connection information of the base station eNB that is connected to them. Similarly, the base station eNB stores, in advance, connection information of the serving gateways SGW connected to its own station and that of the switching center MME connected to its own station.

Step S100 is a step at which the first serving gateway SGW1 1 acquires connection information CN of other nodes. At step S100, the first serving gateway SGW1 acquires and stores the first connection information CN1 from the packet gateway PGW (S102), acquires and stores the second connection information CN2 from the second serving gateway SGW2 (S104), and acquires and stores the third connection information CN3 from the switching center MME (S106). The sequence of and the frequency of acquiring each connection information CN can be freely chosen.

Step S200 is a step at which the first serving gateway SGW1 transmits connection information CN to other nodes. At step S200, the first serving gateway SGW1 transmits the second connection information CN2 to the packet gateway PGW (S202), transmits the first connection information CN1 and the third connection information CN3 to the second serving gateway SGW2 (S204), and transmits the second connection information CN2 to the switching center MME (S206). The sequence of and the frequency of transmitting each connection information CN can be freely chosen. Each node (the packet gateway PGW, the second serving gateway SGW2, the switching center MME) receives and stores the connection information CN (CN1, CN2, CN3).

Step S300 is a step at which a dedicated bearer is established. The packet gateway PGW transmits a Create Bearer Request that requests establishment of a dedicated bearer corresponding to the access point name "APN1" between the packet gateway PGW and the user device UE through the second serving gateway SGW2 to the second serving gateway SGW2 using the second connection information CN2 (S302). The second serving gateway SGW2, based on the received Create Bearer Request, transmits a Create Bearer Request directed at the switching center MME to the switching center MME using the third connection information CN3 (S304).

The switching center MME, in accordance with the Create Bearer Request directed at the switching center MME, transmits a Bearer Setup Request to establish a dedicated bearer (more specifically, to establish a radio bearer included in the dedicated bearer) to the base station eNB (S306). The base station eNB, in accordance with the received Bearer Setup Request, transmits, to the user device UE, an RRC Connection Reconfiguration that includes a command to set up a radio bearer with the base station eNB and with the user device UE (S308). The user device UE, based on the received RRC Connection Reconfiguration, reconfigures settings of its own device to establish a radio bearer corresponding to the dedicated bearer and transmits an RRC Connection Reconfiguration Complete that indicates completion of reconfiguring the settings to the base station eNB (S310). The base station eNB, after receiving the RRC Connection Reconfiguration Complete from the user device UE, transmits, to the switching center MME, a Bearer Setup Response that indicates that the radio bearer corresponding to the dedicated bearer has been established (S312). After receiving the Bearer Setup Response, the switching center MME transmits a Create Bearer Response to the second serving gateway SGW2 using the second connection information CN2 (S314). That is, after controlling the base station eNB and the user device UE in accordance with the Create Bearer Request so that the dedicated bearer is established, the switching center MME transmits a Create Bearer Response to the second serving gateway SGW2.

The second serving gateway SGW2, based on the received Create Bearer Response, transmits a Create Bearer Response directed at the packet gateway PGW to the packet gateway PGW using the first connection information CN1 (S316). The packet gateway PGW receives the Create Bearer Response directed at the packet gateway PGW.

As a result of the dedicated bearer establishment operation described above, while the default bearer that corresponds to the access point name "APN1" and passes through the first serving gateway SGW1 is maintained, the dedicated bearer that corresponds to the same access point name "APN1" is established between the packet gateway PGW and the user device UE through the second serving gateway SGW2. That is, with the configuration according to the present embodiment, bearers having the same access point name APN are established through different serving gateways SGW.

### 1-4. Configuration of Each Element

### 1-4-1. Configuration of User Device

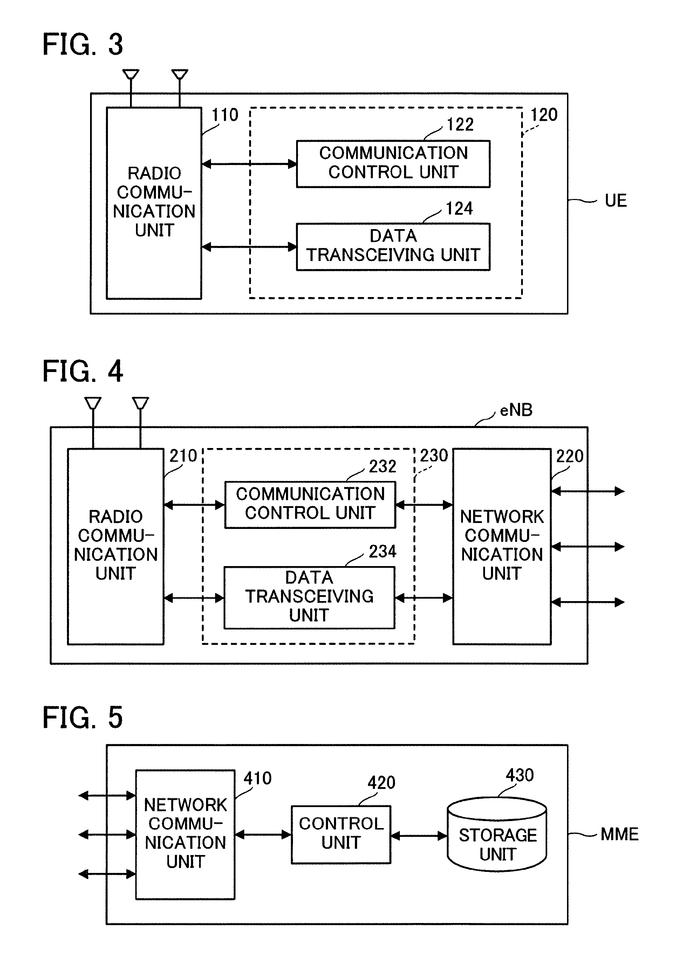

FIG. 3 is a block diagram illustrating a configuration of the user device UE according to the present embodiment. The user device UE includes a radio communication unit 110 and a control unit 120. In the figure, the illustrations of an output device for outputting a voice, pictures, etc., and an input device for accepting instructions from a user are omitted for descriptive purposes.

The radio communication unit 110 is an element for performing radio communication with the base station eNB, and includes transceiving antennas, a receiving circuit for receiving radio signals (radio waves) from the base station eNB and converting them to electrical signals, and a transmitting circuit for converting electrical signals, such as a data signal and a control signal, to radio signals (radio waves) and transmitting them.

The control unit 120 includes a communication control unit 122 and a data transceiving unit 124. The communication control unit 122 is an element for controlling communication between the user device UE and the base station eNB, and transmits and receives a control signal to and from the base station eNB through the radio communication unit 110. That is, the communication control unit 122 performs C-plane communication. For example, in the establishment of the dedicated bearer described above, the communication control unit 122 configures the radio communication unit 110 and the data transceiving unit 124 to establish a radio bearer based on the RRC Connection Reconfiguration received from the base station eNB. More specifically, the communication control unit 122 configures the radio communication unit 110 and the data transceiving unit 124 so that radio communication is performed in accordance with a radio bearer ID and a radio bearer QoS indicated by the received RRC Connection Reconfiguration. The data transceiving unit 124 transmits and receives a data signal to and from the base station eNB through the radio communication unit 110 using the established bearer. That is, the data transceiving unit 124 performs U-plane communication.

The control unit 120 and the communication control unit 122 and the data transceiving unit 124 included in the control unit 120 are functional blocks embodied by a CPU (central processing unit; not shown) in the user device UE executing a computer program stored in a storage unit (not shown) and operating in accordance with the computer program.

### 1-4-2. Configuration of Base Station

FIG. 4 is a block diagram illustrating a configuration of the base station according to the present embodiment. The base station eNB includes a radio communication unit 210, a network communication unit 220, and a control unit 230. The radio communication unit 210 is an element for performing radio communication with the user device UE, and has a configuration similar to that of the radio communication unit 110 of the user device UE. The network communication unit 220 is an element for performing communication with other nodes (the switching center MME, the first serving gateway SGW1, the second serving gateway SGW2, etc.) in the network NW, and transmits and receives electrical signals to and from other nodes by wire or by radio.

The control unit 230 includes a communication control unit 232 and a data transceiving unit 234. The communication control unit 232 is an element for controlling communication with the user device UE based on a command (a control signal) from an upper node (e.g., the switching center MME). The communication control unit 232 transmits and receives a control signal to and from the switching center MME through the network communication unit 220 and transmits and receives a control signal to and from the user device UE through the radio communication unit 210. That is, the communication control unit 232 performs C-plane communication. For example, in the establishment of the dedicated bearer described above, the communication control unit 232 transmits the RRC Connection Reconfiguration to the user device UE in accordance with the Create Bearer Request received from the switching center MME so as to make the user device UE establish a radio bearer. As described above, the RRC Connection Reconfiguration mentioned above indicates the radio bearer ID and the radio bearer QoS. The data transceiving unit 234, using the established bearer, transmits and receives (relays) a data signal to and from the user device UE through the radio communication unit 210 and transmits and receives (relays) a data signal to and from the serving gateways SGW (SGW1, SGW2) through the network communication unit 220. That is, the data transceiving unit 234 performs U-plane communication.

The control unit 230 and the communication control unit 232 and the data transceiving unit 234 included in the control unit 230 are functional blocks embodied by a CPU (not shown) in the base station eNB executing a computer program stored in a storage unit (not shown) and operating in accordance with the computer program.

### 1-4-3. Configuration of Switching Center

FIG. 5 is a block diagram illustrating a configuration of the switching center MME according to the present embodiment. The switching center MME includes a network communication unit 410, a control unit 420, and a storage unit 430. The network communication unit 410 is an element for performing communication with other nodes (the base station eNB, the first serving gateway SGW1, the second serving gateway SGW2, etc.) in the network NW, and transmits and receives electrical signals to and from other nodes by wire or by radio. The storage unit 430 stores information related to communication control, in particular, connection information CN of each node, including that of its own center. Connection information CN stored in the storage unit 430 includes, in particular, the second connection information CN2 of the second serving gateway SGW2.

The control unit 420 functions as a communication control unit. The control unit 420 is an element for performing communication control of the radio communication system CS. The control unit 420 transmits and receives a control signal to and from the base station eNB, the serving gateways SGW (SGW1, SGW2), etc. through the network communication unit 410. The control unit 420 acquires connection information CN included in control signals from nodes such as the serving gateways SGW and stores them in the storage unit 430. That is, the control unit 420 performs C-plane communication. For example, in the establishment of the dedicated bearer described above, the control unit 420 transmits the Bearer Setup Request for establishing a dedicated bearer to the base station eNB in accordance with the Create Bearer Request received from the first serving gateway SGW1. Additionally, in accordance with the Bearer Setup Response t received from the base station eNB, the control unit 420 transmits the Create Bearer Response to the second serving gateway SGW2 using the second connection information CN2.

The control unit 420 is a functional block embodied by a CPU (not shown) in the switching center MME executing a computer program stored in the storage unit 430 and operating in accordance with the computer program.

### 1-4-4. Configuration of Serving Gateway

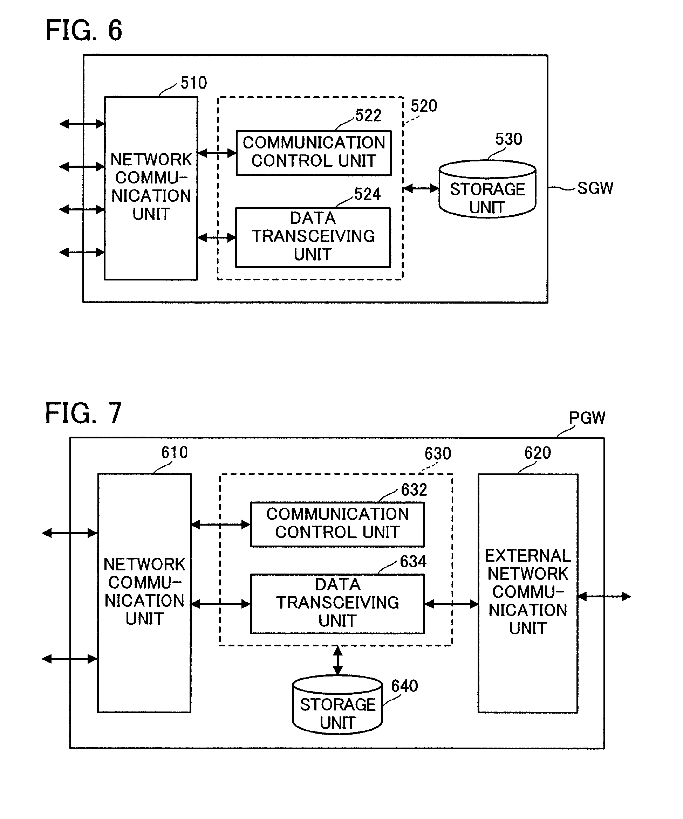

FIG. 6 is a block diagram illustrating a configuration of the serving gateways SGW (SGW1, SGW2) according to the present embodiment. Each of the serving gateways SGW includes a network communication unit 510, a control unit 520, and a storage unit 530. The network communication unit 510 is an element for performing communication with other nodes (the switching center MME, the other serving gateway SGW, the packet gateway PGW, etc.) in the network NW, and transmits and receives electrical signals to and from other nodes by wire or by radio. The storage unit 530 stores information related to communication control, in particular, connection information CN of each node, including that of its own gateway. Connection information CN stored in the storage unit 530 includes, in particular, the first connection information CN1 of the packet gateway PGW, the second connection information CN2 of the other serving gateway SGW, and the third connection information CN3 of the switching center MME.

The control unit 520 includes a communication control unit 522 and a data transceiving unit 524. The communication control unit 522 is an element for performing communication control of the radio communication system CS based on a command (a control signal) from an upper node (the packet gateway PGW). The communication control unit 522 transmits and receives a control signal to and from the switching center MME, the other serving gateway SGW, the packet gateway PGW, etc. through the network communication unit 510. The communication control unit 522 acquires connection information CN included in control signals from other nodes and stores them in the storage unit 530. That is, the communication control unit 522 performs C-plane communication. For example, in the establishment of the dedicated bearer described above, the communication control unit 522 transmits the connection information CN (CN1, CN2, CN3) to each node (the packet gateway PGW, the other serving gateway SGW, the switching center MME, etc.). That is, the communication control unit 522 can function as a connection information transmitting unit. Additionally, the communication control unit 522 transmits the Create Bearer Request directed at the switching center MME to the switching center MME using the third connection information CN3 in accordance with the Create Bearer Request received from the packet gateway PGW, and transmits the Create Bearer Response directed at the packet gateway PGW to the packet gateway PGW using the first connection information CN1 in accordance with the Create Bearer Response received from the base station eNB.

The data transceiving unit 524 transmits and receives (relays) a data signal to and from the base station eNB and the packet gateway PGW through the network communication unit 510 using the established bearer. That is, the data transceiving unit 524 performs U-plane communication.

The control unit 520 and the communication control unit 522 and the data transceiving unit 524 included in the control unit 520 are functional blocks embodied by a CPU (not shown) in each of the serving gateways SGW (SGW1, SGW2) executing a computer program stored in the storage unit 530 and operating in accordance with the computer program.

### 1-4-5. Configuration of Packet Gateway

FIG. 7 is a block diagram illustrating a configuration of the packet gateway PGW according to the present embodiment. The packet gateway PGW includes a network communication unit 610, an external network communication unit 620, a control unit 630, and a storage unit 640. The network communication unit 610 is an element for performing communication with other nodes (the serving gateways SGW, etc.) in the network NW, and transmits and receives electrical signals to and from other nodes by wire or by radio. The external network communication unit 620 is an element for performing communication with the internet IN, and performs protocol conversion of electrical signals (data signals) as necessary. The storage unit 640 stores information related to communication control, in particular, connection information CN of each node, including that of its own gateway. Connection information CN stored in the storage unit 640 includes, in particular, the second connection information CN2 of the second serving gateway SGW2. The storage unit 640 stores the access point name APN assigned to the packet gateway PGW.

The control unit 630 includes a communication control unit 632 and a data transceiving unit 634. The communication control unit 632 is an element for performing communication control of the radio communication system CS based on an occurrence of a trigger to newly establish a dedicated bearer. The communication control unit 632 transmits and receives a control signal to and from the serving gateways SGW (SGW1, SGW2), etc. through the network communication unit 610. Examples of "a trigger to newly establish a dedicated bearer" include an occurrence of a new type of communication that requires QoS that is different from the QoS of the established bearer (e.g., while data for web browsing are transmitted and received using a default bearer, data for streaming are generated) and an increase in communication loads at a serving gateway SGW through which the default bearer passes. The control unit 630 acquires connection information CN included in control signals from other nodes and stores them in the storage unit 640. That is, the control unit 630 performs C-plane communication. For example, in the establishment of the dedicated bearer described above, the control unit 630 transmits the Create Bearer Request that requests establishment of the dedicated bearer corresponding to the access point name APN to the second serving gateway SGW2 using the second connection information CN2 and receives the Create Bearer Response from the second serving gateway SGW2.

The data transceiving unit 634 transmits (relays) data signals that are originated from the user device UE and are received through the network communication unit 610 to the internet IN (an external server in the internet IN) though the external network communication unit 620, and transmits (relays) data signals received through the external network communication unit 620 from the internet IN (the external server in the internet IN) to the user device UE through the network communication unit 610.

The control unit 630 and the communication control unit 632 and the data transceiving unit 634 included in the control unit 630 are functional blocks embodied by a CPU (not shown) in the packet gateway PGW executing a computer program stored in the storage unit 640 and operating in accordance with the computer program.

### 1-5. Advantages of Present Embodiment

According to the first embodiment described above, bearers (a default bearer, a dedicated bearer) that are established through the same packet gateway PGW, i.e., bearers to which the same access point name APN is assigned, can be established through different serving gateways SGW (SGW1, SGW2). Therefore, communication loads at the serving gateways SGW, which are upper nodes at which communication traffic is likely to be concentrated, are distributed. Thus, the overall throughput of the radio communication system CS can be improved.

Additionally, since a single access point name APN can correspond to multiple logical paths (a default bearer, a dedicated bearer), while the same access point is used (i.e., without dividing a service), load distribution at the serving gateways can be achieved. In a configuration in which a single access point name APN can correspond to only a single bearer, upon establishing a new bearer, a bearer that corresponds to a different access point name APN, that is, a bearer that is different from the service in use, needs to be established. Such configuration has an issue that for a user who can use only a single service, it is impossible to distribute loads at a serving gateway SGW. Also, for a user who can use multiple services, there is an issue that it is impossible to distribute loads at a serving gateway SGW without using multiple access points (i.e., unless the service is divided) and it is impossible to distribute loads at the serving gateway SGW within the single service. With the configuration of the present embodiment, the issues described above can be solved.

### SECOND EMBODIMENT

Description is next given of a second embodiment of the present invention. In each embodiment described below, for elements for which operation and function are equivalent to those of the first embodiment, the reference symbols used in the above description are used, and description thereof will be omitted as appropriate.

### 2-1. Establishment of Dedicated Bearer

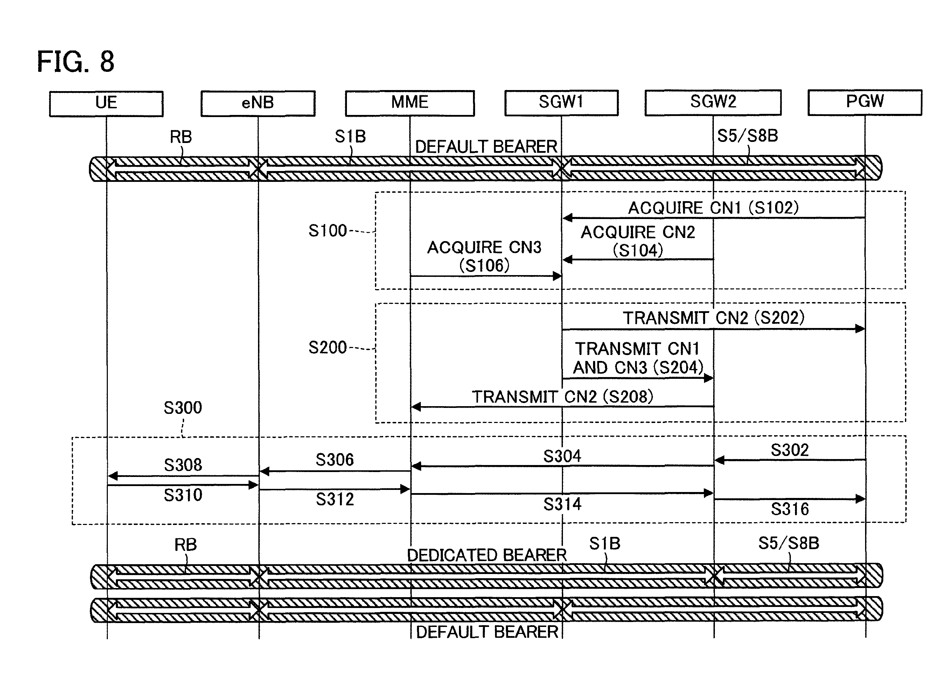

With reference to FIG. 8, an example of a dedicated bearer establishment operation according to the second embodiment is described. An operation flow shown in FIG. 8 differs in step S200 from that of the first embodiment (FIG. 2), and with respect to other parts, is similar to that of the first embodiment.

Step S200 is a step at which the first serving gateway SGW1 and the second serving gateway SGW2 transmit connection information CN to other nodes. At step S200, the first serving gateway SGW1 transmits the second connection information CN2 to the packet gateway PGW (S202), and transmits the first connection information CN1 and the third connection information CN3 to the second serving gateway SGW2 (S204). The second serving gateway SGW2 transmits the second connection information CN2 to the switching center MME (S208). The sequence of and the frequency of transmitting each connection information CN can be freely chosen. Each node (the packet gateway PGW, the second serving gateway SGW2, the switching center MME) receives and stores the connection information CN (CN1, CN2, CN3).

The second serving gateway SGW2 (the communication control unit 522) may transmit the second connection information CN2 to the switching center MME upon reception of the connection information CN (CN1 and CN3) from the first serving gateway SGW1, or may transmit the second connection information CN2 to the switching center MME independently of the reception of the connection information CN. Alternatively, when transmitting the connection information CN to the second serving gateway SGW2, the first serving gateway SGW1 may transmit a "command to transmit the second connection information CN2 to the switching center MME" along with the connection information CN. The second serving gateway SGW2 may, in accordance with the command, transmit the second connection information CN2 to the switching center MME.

Each node (the packet gateway PGW, the second serving gateway SGW2, the switching center MME) establishes a dedicated bearer based on the connection information CN (CN1, CN2, CN3) in a manner similar to that in the first embodiment (S300).

### 2-2. Advantages of Present Embodiment

The second embodiment has advantages similar to those of the first embodiment. Furthermore, since the second serving gateway SGW2 transmits the second connection information CN2 of its own gateway directly to the switching center MME, compared with a configuration in which the second connection information CN2 is indirectly transmitted from the first serving gateway SGW1, more updated second connection information CN2 can be transmitted to the switching center MME.

### THIRD EMBODIMENT

### 3-1. Configurations of Radio Communication System and Base Station

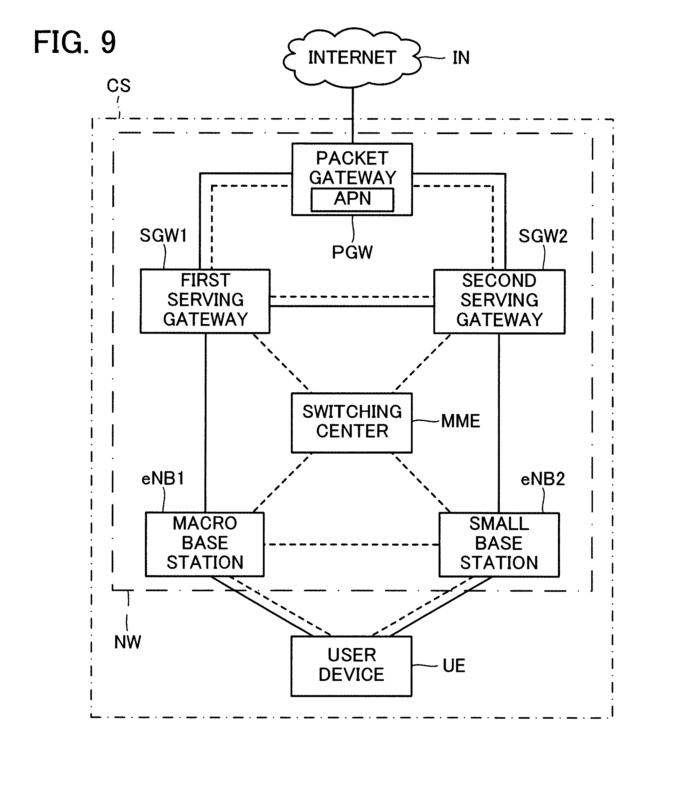

FIG. 9 is a block diagram of a radio communication system CS according to a third embodiment of the present invention. The radio communication system CS according to the third embodiment includes a macro base station eNB1 and a small base station eNB2, as its base stations eNB. A configuration of the macro base station eNB1 and that of the small base station eNB2 are similar to that of the base station eNB according to the first embodiment (FIG. 4). The user device UE can perform radio communication with one of the macro base station eNB1 and the small base station eNB2, or can perform radio communication with both of them simultaneously.

The macro base station eNB1 is wire-connected to the switching center MME and to the first serving gateway SGW1. The small base station eNB2 is wire-connected to the switching center MME and to the second serving gateway SGW2. The macro base station eNBand the small base station eNB2 can communicate with each other by wire or by radio.

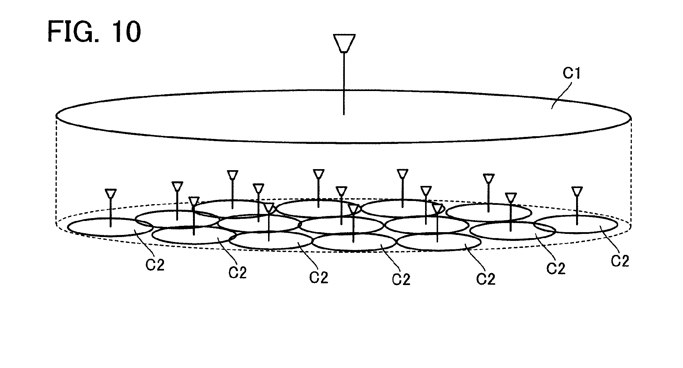

FIG. 10 is a drawing illustrating a macro cell C1 that the macro base station eNB1 forms around it and small cells C2 that small base stations eNB2 form around them. An antenna of each base station is schematically shown in each cell C. For descriptive purposes, a plane on which the macro cell C1 is shown differs from a plane on which the small cells C2 are shown. However, in reality, the macro cell C 1 and the small cells C2 can be overlaid on the same plane (e.g., land surface).

A cell C (macro cell C1, small cell C2) is a range within which radio waves from each base station (macro base station eNB1, small base station eNB2) reach the user device UE effectually. Therefore, the user device UE can perform radio communication with a base station eNB corresponding to a cell C in which the user device UE is present.

The small base station eNB2 is smaller in scale and has lower radio transmitting capabilities (average transmitting power, maximum transmitting power, etc.) than the macro base station eNB1. A frequency band (a second frequency band; e.g., 3.5 GHz band) that the small base station eNB2 uses for radio communication is higher in frequency and has greater propagation loss than a frequency band (a first frequency band; e.g., 2 GHz band) that the macro base station eNB1 uses for radio communication. Therefore, each small cell C2 is smaller in area than the macro cell C1. As a result, generally, radio communication using the first frequency band (the macro base station eNB1) tends to be more stable than radio communication using the second frequency band (the small base station eNB2). On the other hand, since a frequency band with higher frequency can perform radio communication using wider bandwidth, if communication quality is maintained, radio communication using the second frequency band with frequency higher than the first frequency tends to provide higher throughput than radio communication using the first frequency band.

Considering that the small cells C2 are formed inside the macro cell C1 in a multi-layered manner (overlaid), when the user device UE is located in one of the small cells C2, the user device UE can perform radio communication with the small base station eNB2 forming the small cell C2 and the macro base station eNB1 forming the macro cell C1 that includes the small cell C2.

### 3-2. Establishment of Dedicated Bearer

In the first embodiment (FIG. 2) and the second embodiment (FIG. 8), a default bearer and a dedicated bearer are established though a common base station eNB. In an example below, a default bearer is established between the packet gateway PGW and the user device UE through the macro base station eNB 1 and the first serving gateway SGW1, and a dedicated bearer is established between the packet gateway PGW and the user device UE through the small base station eNB2 and the second serving gateway SGW2. Hereinafter, a bearer (default bearer in the present example) that passes through the macro base station eNB1 may be referred to as a macro bearer, and a bearer (dedicated bearer in the present example) that passes through the small base station eNB2 may be referred to as a small bearer.

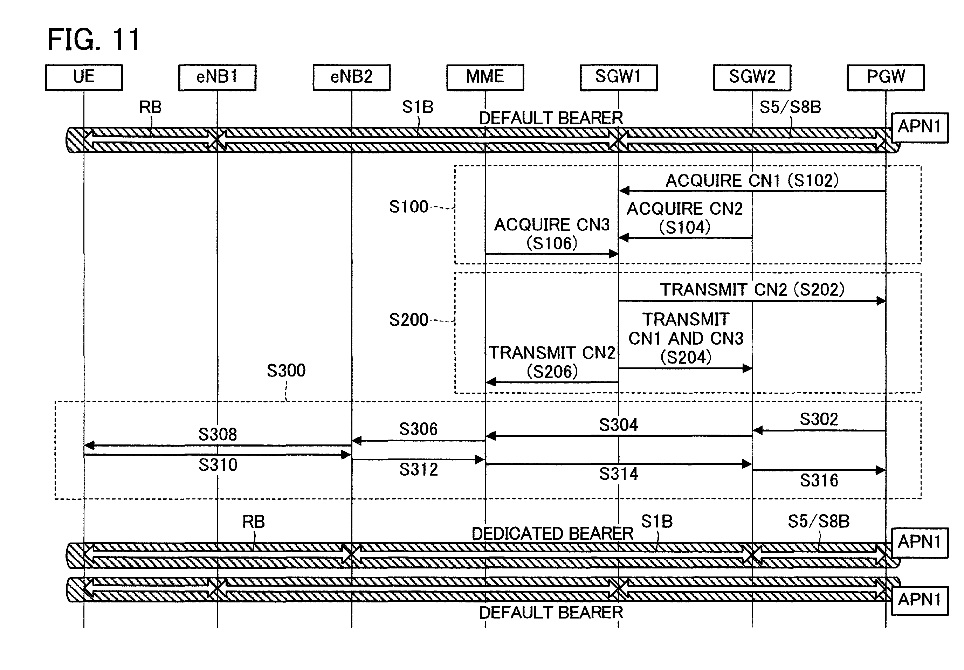

With reference to FIG. 11, the present example is described specifically. In the example shown in FIG. 11, a default bearer is assumed to have been established between the user device UE and the packet gateway PGW through the macro base station eNB1 and the first serving gateway SGW 1. In the example shown in FIG. 11, step S 100 at which connection information CN is acquired and step S200 at which the connection information CN is transmitted are similar to those in the first embodiment. A configuration can be adopted in which the connection information CN is transmitted based on step S200 in the second embodiment instead of step S200 in the first embodiment.

At step S300 at which a dedicated bearer is established, the packet gateway PGW transmitting a Create Bearer Request to the second serving gateway SGW2 (S302) and the second serving gateway SGW2 transmitting a Create Bearer Request to the switching center MME (S304) are as described in the above embodiments.

The switching center MME, in accordance with the Create Bearer Request directed at the switching center MME, transmits a Bearer Setup Request to establish a dedicated bearer to the small base station eNB2 that is connected to its own center (S306). The small base station eNB2, in accordance with the received Bearer Setup Request, transmits, to the user device UE, an RRC Connection Reconfiguration that includes a command to set up a radio bearer with the small base station eNB2 and with the user device UE (S308). The user device UE, based on the received RRC Connection Reconfiguration, reconfigures settings of its own device to establish a radio bearer corresponding to the dedicated bearer and transmits an RRC Connection Reconfiguration Complete that indicates completion of reconfiguring the settings to the small base station eNB2 (S310). The small base station eNB2, after receiving the RRC Connection Reconfiguration Complete from the user device UE, transmits, to the switching center MME, a Bearer Setup Response that indicates that the radio bearer corresponding to the dedicated bearer has been established (S312). The rest of the operation is as described in the above embodiments.

As a result of the dedicated bearer establishment operation described above, while the default bearer that corresponds to the access point name "APN1" and passes through the macro base station eNB, and the first serving gateway SGW1 is maintained, the dedicated bearer that corresponds to the same access point name "APN1" is established between the packet gateway PGW and the user device UE through the small base station eNB2 and the second serving gateway SGW2. That is, with the configuration of the present embodiment, bearers having the same access point name APN are established through different base stations eNB and different serving gateways SGW.

As described above, considering that radio communication with the macro base station eNB1 using the first frequency band is more stable than radio communication with the small base station eNB2 using the second frequency band, when performing radio communication after establishing the dedicated bearer, the user device UE preferably selects from the macro bearer and the small bearer based on the importance, delay tolerance, etc. of information to be transmitted and received. For example, while transmitting and receiving voice signals using the macro bearer, the switching center MME preferably controls the user device UE so that the user device UE transmits and receives data signals using the small bearer. Since radio communication with the macro base station eNB1 using the first frequency band is more stable than that with the small base station eNB2, control signals related to control of the user device UE (e.g., transmitting power control of the user device UE, handover control, etc.) are preferably transmitted to the user device UE from the switching center MME through the macro base station eNB1.

### 3-3. Advantages of Present Embodiment

The third embodiment has advantages similar to those of the above embodiments. Furthermore, since load distribution is performed not only at the level of the serving gateways SGW (SGW1 and SGW2), but also at the level of base stations eNB (eNB1 and eNB2), load distribution can be achieved more effectively. Thus, the overall throughput of the radio communication system CS can be improved even more. Additionally, if large volumes of data (such as data signals) are transmitted and received using a communication path that uses a high frequency band and has high throughput and if important information (control signals, voice signals, etc.) is transmitted and received using a communication path that uses a low frequency band and is more stable, improvement in throughput and stable transmission and reception of important information can be achieved at the same time.

### MODIFICATIONS

Various modifications may be applied to the above-described embodiments. Specific modifications are exemplified below. Two or more modes selected from among the above embodiments and the following examples may be combined as appropriate, provided that the combined modes do not conflict with each other.

### 4-1. Modification 1

In the above embodiments, the first serving gateway SGW1 and the second serving gateway SGW2 can communicate with each other through the interfaces of the U-plane and those of the C-plane. However, a configuration may be adopted in which the first serving gateway SGW1 and the second serving gateway SGW2 can communicate with each other through the interfaces of the C-plane only (i.e., a configuration in which only control signals are transmitted and received).

### 4-2. Modification 2

The number of access point names APN assigned to the packet gateway PGW is not limited to one. Multiple access point names APN may be assigned to a single packet gateway PGW.

### 4-3. Modification 3

In the above embodiments, a logical path controlled by the communication control unit (122, 232, 420, 522, 632) of each node is a bearer. However, the communication control unit (122, 232, 420, 522, 632) of each node may control other logical paths such as a session at the IP (Internet Protocol) level.

### 4-4. Modification 4

In the above embodiments, in a state in which a default bearer has been established through the first serving gateway SGW1, a dedicated bearer is established through the second serving gateway SGW2. However, multiple dedicated bearers corresponding to the same access point name APN may be established. For example, a configuration may be adopted in which while a default bearer and a dedicated bearer have been established through the first serving gateway SGW1, another dedicated bearer is established through the second serving gateway SGW2 based on the above embodiments.

### 4-5. Modification 5

In the above embodiments, connection information CN of the base station eNB is stored in advance at other nodes (the switching center MME, the serving gateways SGW, etc.). However, a configuration may be adopted in which the base station eNB transmits connection information CN of its own station to other nodes, and other nodes store the received connection information CN of the base station eNB.

### 4-6. Modification 6

In the above embodiments, the packet gateway PGW generates a trigger (a request) to establish a dedicated bearer. However, a configuration may be adopted in which the user device UE generates a trigger (a request) to establish a dedicated bearer. For example, when the user device UE newly requests streaming distribution of moving images, the user device UE (the communication control unit 122) may request a node on the network NW side (e.g., the packet gateway PGW) to establish a dedicated bearer that has QoS suitable for streaming distribution of moving images.

### 4-7. Modification 7

The user device UE is a freely chosen device that can perform radio communication with each base station eNB (eNBl, eNB2). The user device UE may be a mobile phone terminal such as a feature phone and a smartphone, a desktop personal computer, a laptop personal computer, a UMPC (ultra-mobile personal computer), a portable game machine, or any other type of radio terminal.

### 4-8. Modification 8

In each of the elements in the radio communication system CS (the user device UE, the base stations eNB (eNB 1, eNB2), the switching center MME, the serving gateways SGW (SGW1, SGW2), the packet gateway PGW), functions executed by the CPU may be instead executed by hardware or by a programmable logic device, such as an FPGA (Field Programmable Gate Array) and a DSP (Digital Signal Processor).

### REFERENCE SYMBOLS

UE: User Device
   110: Radio Communication Unit
   120: Control Unit
   122: Communication Control Unit
   124: Data Transceiving Unit
   eNB: Base Station
   eNB1: Macro Base Station
   eNB2: Small Base Station
   210: Radio Communication Unit
   220: Network Communication Unit
   230: Control Unit
   232: Communication Control Unit
   234: Data Transceiving Unit
MME: Switching Center
   410: Network Communication Unit
   420: Control Unit
   430: Storage Unit
SGW (SGW1, SGW2): Serving Gateway
   510: Network Communication Unit
   520: Control Unit
   522: Communication Control Unit
   524: Data Transceiving Unit
   530: Storage Unit
PGW: Packet Gateway
   610: Network Communication Unit
   620: External Network Communication Unit
   630: Control Unit
   632: Communication Control Unit
   634: Data Transceiving Unit
   640: Storage Unit
APN: Access Point Name
C: Cell
C1: Macro Cell
C2: Small Cell
CN (CN1, CN2, CN3): Connection Information
CS: Radio Communication System
IN: Internet
NW: Network

## Claims

1. A radio communication system comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path;
at least one base station connected to the switching center; and
a user device wirelessly communicable with the at least one base station, the first serving gateway comprising:
a storage unit that stores first connection information used to connect to the packet gateway, second connection information used to connect to the second serving gateway, and third connection information used to connect to the switching center; and
a connection information transmitting unit that transmits the second connection information to the packet gateway, transmits the first connection information and the third connection information to the second serving gateway, and transmits the second connection information to the switching center,
wherein when a first logical path corresponding to the access point name of the packet gateway is established between the packet gateway and the user device through the first serving gateway,
the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path,
the second serving gateway, based on the received logical path establishment request, transmits a logical path establishment request directed at the switching center to the switching center using the third connection information,
the switching center, after controlling the at least one base station and the user device in accordance with the logical path establishment request directed at the switching center so that the second logical path is established, transmits a logical path establishment response to the second serving gateway using the second connection information,
the second serving gateway, based on the received logical path establishment response, transmits a logical path establishment response directed at the packet gateway to the packet gateway using the first connection information, and
the packet gateway receives the logical path establishment response directed at the packet gateway.

2. A radio communication system comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path;
at least one base station connected to the switching center; and
a user device wirelessly communicable with the at least one base station, the first serving gateway comprising:
a first storage unit that stores first connection information used to connect to the packet gateway, second connection information used to connect to the second serving gateway, and third connection information used to connect to the switching center; and
a first connection information transmitting unit that transmits the second connection information to the packet gateway and transmits the first connection information and the third connection information to the second serving gateway,
the second serving gateway comprising:
a second storage unit that stores the second connection information; and
a second connection information transmitting unit that transmits the second connection information to the switching center,
wherein when a first logical path corresponding to the access point name of the packet gateway is established between the packet gateway and the user device through the first serving gateway,
the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path,
the second serving gateway, based on the received logical path establishment request, transmits a logical path establishment request directed at the switching center to the switching center using the third connection information,
the switching center, after controlling the at least one base station and the user device in accordance with the logical path establishment request directed at the switching center so that the second logical path is established, transmits a logical path establishment response to the second serving gateway using the second connection information,
the second serving gateway, based on the received logical path establishment response, transmits a logical path establishment response directed at the packet gateway to the packet gateway using the first connection information, and
the packet gateway receives the logical path establishment response directed at the packet gateway

3. The radio communication system according to Claim 1, further comprising:
a first base station and a second base station, each of which is a base station comprised in the at least one base station,
wherein the first logical path is established between the packet gateway and the user device through the first base station and the first serving gateway, and
wherein the second logical path is established between the packet gateway and the user device through the second base station and the second serving gateway.

4. The radio communication system according to Claim 3,
wherein the first base station forms a first cell and is wirelessly communicable with the user device using a first frequency band, and
wherein the second base station forms a second cell that is smaller than the first cell and is wirelessly communicable with the user device using a second frequency band that is higher in frequency than the first frequency band.

5. A serving gateway in a radio communication system,
the radio communication system comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path;
at least one base station connected to the switching center; and
a user device wirelessly communicable with the at least one base station,
the serving gateway being the first serving gateway in the radio communication system,
the serving gateway comprising:
a storage unit that stores first connection information used to connect to the packet gateway, second connection information used to connect to the second serving gateway, and third connection information used to connect to the switching center; and
a connection information transmitting unit that transmits the second connection information to the packet gateway, transmits the first connection information and the third connection information to the second serving gateway, and transmits the second connection information to the switching center,
wherein when a first logical path corresponding to the access point name of the packet gateway is established between the packet gateway and the user device through the first serving gateway,
the second connection information is used by the packet gateway to transmit a logical path establishment request to the second serving gateway, the logical path establishment request requesting establishment of a second logical path between the packet gateway and the user device through the second serving gateway, the second logical path corresponding to the access point name and being different from the first logical path,
the third connection information is used by the second serving gateway to transmit, based on the received logical path establishment request, a logical path establishment request directed at the switching center to the switching center,
the second connection information is, after the switching center controls the at least one base station and the user device in accordance with the logical path establishment request directed at the switching center so that the second logical path is established, further used by the switching center to transmit a logical path establishment response to the second serving gateway, and
the first connection information is used by the second serving gateway to transmit, based on the received logical path establishment response, a logical path establishment response directed at the packet gateway to the packet gateway.

6. A network comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path; and
at least one base station that is connected to the switching center and is wirelessly communicable with a user device,
the first serving gateway comprising:
a storage unit that stores first connection information used to connect to the packet gateway, second connection information used to connect to the second serving gateway, and third connection information used to connect to the switching center; and
a connection information transmitting unit that transmits the second connection information to the packet gateway, transmits the first connection information and the third connection information to the second serving gateway, and transmits the second connection information to the switching center,
wherein when a first logical path corresponding to the access point name of the packet gateway is established between the packet gateway and the user device through the first serving gateway,
the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path,
the second serving gateway, based on the received logical path establishment request, transmits a logical path establishment request directed at the switching center to the switching center using the third connection information,
the switching center, after controlling the at least one base station and the user device in accordance with the logical path establishment request directed at the switching center so that the second logical path is established, transmits a logical path establishment response to the second serving gateway using the second connection information,
the second serving gateway, based on the received logical path establishment response, transmits a logical path establishment response directed at the packet gateway to the packet gateway using the first connection information, and
the packet gateway receives the logical path establishment response directed at the packet gateway.

7. A network comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path; and
at least one base station that is connected to the switching center and is wirelessly communicable with a user device,
the first serving gateway comprising:
a first storage unit that stores first connection information used to connect to the packet gateway, second connection information used to connect to the second serving gateway, and third connection information used to connect to the switching center; and
a first connection information transmitting unit that transmits the second connection information to the packet gateway and transmits the first connection information and the third connection information to the second serving gateway,
the second serving gateway comprising:
a second storage unit that stores the second connection information; and
a second connection information transmitting unit that transmits the second connection information to the switching center,
wherein when a first logical path corresponding to the access point name of the packet gateway is established between the packet gateway and the user device through the first serving gateway,
the packet gateway transmits a logical path establishment request to the second serving gateway using the second connection information, the logical path establishment request requesting establishment of a second logical path between the packet gateway and the user device through the second serving gateway, the second logical path corresponding to the access point name and being different from the first logical path,
the second serving gateway, based on the received logical path establishment request, transmits a logical path establishment request directed at the switching center to the switching center using the third connection information,
the switching center, after controlling the at least one base station and the user device in accordance with the logical path establishment request directed at the switching center so that the second logical path is established, transmits a logical path establishment response to the second serving gateway using the second connection information,
the second serving gateway, based on the received logical path establishment response, transmits a logical path establishment response directed at the packet gateway to the packet gateway using the first connection information, and
the packet gateway receives the logical path establishment response directed at the packet gateway.

8. A logical path establishment method for a radio communication system, the radio communication system comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path;
at least one base station connected to the switching center; and
a user device wirelessly communicable with the at least one base station, the logical path establishment method comprising:
in the first serving gateway,
storing first connection information used to connect to the packet gateway, second connection information used to connect to the second serving gateway, and third connection information used to connect to the switching center,
transmitting the second connection information to the packet gateway, transmitting the first connection information and the third connection information to the second serving gateway, and transmitting the second connection information to the switching center,
wherein when a first logical path corresponding to the access point name of the packet gateway is established between the packet gateway and the user device through the first serving gateway,
in the packet gateway,
transmitting a logical path establishment request to the second serving gateway using the second connection information, the logical path establishment request requesting establishment of a second logical path between the packet gateway and the user device through the second serving gateway, the second logical path corresponding to the access point name and being different from the first logical path,
in the second serving gateway,
transmitting, based on the received logical path establishment request, a logical path establishment request directed at the switching center to the switching center using the third connection information,
in the switching center,
transmitting, after controlling the at least one base station and the user device in accordance with the logical path establishment request directed at the switching center so that the second logical path is established, a logical path establishment response to the second serving gateway using the second connection information,
in the second serving gateway,
transmitting, based on the received logical path establishment response, a logical path establishment response directed at the packet gateway to the packet gateway using the first connection information, and
in the packet gateway,
receiving the logical path establishment response directed at the packet gateway.

9. A logical path establishment method for a radio communication system, the radio communication system comprising:
a packet gateway that is assigned an access point name and is configured to function as an access point connecting to an external network;
serving gateways that are connected to the packet gateway and include a first serving gateway and a second serving gateway;
a switching center that is connected to the serving gateways and controls establishment of a logical path;
at least one base station connected to the switching center; and
a user device wirelessly communicable with the at least one base station, the logical path establishment method comprising:
in the first serving gateway,
storing first connection information used to connect to the packet gateway, second connection information used to connect to the second serving gateway, and third connection information used to connect to the switching center,
transmitting the second connection information to the packet gateway, and transmitting the first connection information and the third connection information to the second serving gateway, and
in the second serving gateway,
storing the second connection information and
transmitting the second connection information to the switching center,
wherein when a first logical path corresponding to the access point name of the packet gateway is established between the packet gateway and the user device through the first serving gateway,
in the packet gateway,
transmitting a logical path establishment request to the second serving gateway using the second connection information, the logical path establishment request requesting establishment of a second logical path between the packet gateway and the user device through the second serving gateway, the second logical path corresponding to the access point name and being different from the first logical path,
in the second serving gateway,
transmitting, based on the received logical path establishment request, a logical path establishment request directed at the switching center to the switching center using the third connection information,
in the switching center,
transmitting, after controlling the at least one base station and the user device in accordance with the logical path establishment request directed at the switching center so that the second logical path is established, a logical path establishment response to the second serving gateway using the second connection information,
in the second serving gateway,
transmitting, based on the received logical path establishment response, a logical path establishment response directed at the packet gateway to the packet gateway using the first connection information, and
in the packet gateway,
receiving the logical path establishment response directed at the packet gateway.
